Europäisches Patentamt

European Patent Office

Office européen des brevets

(11) Veröffentlichungsnummer: **0 541 635 B1**

(12) **EUROPÄISCHE PATENTSCHRIFT**

(45) Veröffentlichungstag der Patentschrift: **25.01.95**

(51) Int. Cl.⁶: **C09D 161/20**, C09D 167/02, D21H 19/62

(21) Anmeldenummer: **91913916.2**

(22) Anmeldetag: **31.07.91**

(86) Internationale Anmeldenummer:
**PCT/EP91/01435**

(87) Internationale Veröffentlichungsnummer:
**WO 92/02591 (20.02.92 92/05)**

Die Akte enthält technische Angaben, die nach
dem Eingang der Anmeldung eingereicht wurden
und die nicht in dieser Patentschrift enthalten sind.

(54) **WÄSSRIGE BESCHICHTUNGSZUSAMMENSETZUNG, INSBESONDERE ZUR BESCHICHTUNG VON FINISH-FOLIEN UND ENDLOSKANTEN SOWIE VERFAHREN ZUM BESCHICHTEN VON FINISH-FOLIEN UND ENDLOSKANTEN.**

(30) Priorität: **04.08.90 DE 4024835**

(43) Veröffentlichungstag der Anmeldung:
**19.05.93 Patentblatt 93/20**

(45) Bekanntmachung des Hinweises auf die
Patenterteilung:
**25.01.95 Patentblatt 95/04**

(84) Benannte Vertragsstaaten:
**AT BE CH DE DK ES FR GB IT LI NL SE**

(56) Entgegenhaltungen:
EP-A- 0 003 966     EP-A- 0 239 850
EP-A- 0 279 441     EP-A- 0 384 506
WO-A-91/10713       AT-A- 342 170
DE-B- 2 316 289

(73) Patentinhaber: **BASF Lacke + Farben AG**
**Glasuritstrasse 1**
**D-48165 Münster-Hiltrup (DE)**

(72) Erfinder: **ROLL, Joachim**
**Strassburger Weg 56**
**D-4400 Münster (DE)**
Erfinder: **HINTZE-BRÜNING, Horst**
**Karl-Immermann-Strasse 32**
**D-4400 Münster (DE)**

(74) Vertreter: **Münch, Volker, Dr. et al**
**BASF Lacke + Farben AG**
**Patente/Lizenzen/Dokumentation**
**Postfach 61 23**
**D-48136 Münster (DE)**

EP 0 541 635 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung sind wäßrige Beschichtungszusammensetzungen, insbesondere zur Beschichtung von Finish-Folien und Endloskanten, enthaltend eine Lackkomponente I, die

A) ein oder mehrere wasserverdünnbare Melamin- und/oder Harnstoffharze,
B) ein oder mehrere hydroxylgruppenhaltige Polyester sowie
C) ggf. Pigmente und/oder Füllstoffe sowie ggf. übliche Hilfs- und Zusatzstoffe und
D) ggf. Verdünnungsmittel

enthält und eine Lackkomponente II, die einen sauren Härtungskatalysator enthält.

Gegenstand der Erfindung sind außerdem Verfahren zur Beschichtung von Finish-Folien und Endloskanten unter Verwendung dieser wäßrigen Beschichtungszusammensetzungen.

Imprägnierte Papiere, die auf Platten verpreßt eine Vorbereitung im Sinne einer Grundierung darstellen (Grundierfolie) oder häufig auch eine dekorative Wirkung entfalten (Dekorfolie), sind in der Möbel- und Plattenindustrie seit langem bewährt. Die Folien müssen nach dem Verpressen auf Span- oder Hartfaserplatten überlackiert werden.

Dieser zusätzliche Arbeitsgang entfällt beim Einsatz von Finishfolie, die im Anschluß an die Imprägnierung bereits beim Folienhersteller lackiert wird. Die so erhaltenen Finishfolien und Endloskanten (zur kontinuierlichen Kantenbeschichtung) werden als Rollenware an die Möbel- und Plattenindustrie geliefert, wo sie unter Hitze- und/oder Druckeinwirkung mit Substraten, wie z.B. Span- oder Hartfaserplatten verleimt werden. Auf diese Weise werden Flächen erhalten, die in der Regel keiner weiteren Lackierung mehr bedürfen, also "preßfallend" weiterverarbeitet werden können.

Aus der DE-OS 23 16 158 sind wäßrige säurehärtende Zweikomponentenlacke auf der Basis von veretherten Aminoplastharzen und Polyesterharzen bekannt, die auch zur Beschichtung von Folien für die Möbelindustrie eingesetzt werden. In diesen Zweikomponentenlacken werden lineare und/oder verzweigte Polyester mit einem Molekulargewicht zwischen 200 und 6000 sowie einer OH-Zahl bis zu 450 mg KOH/g eingesetzt. Die Herstellung dieser Polyester erfolgt in üblicher Weise durch Umsetzung üblicher Dicarbonsäuren mit üblichen Alkoholen, die zwei oder mehr Hydroxylgruppen tragen.

Die in der DE-OS 23 16 158 beschriebenen Beschichtungsmittel zeichnen sich durch eine schnelle Aushärtung sowie eine hohe Härte, Kratzfestigkeit und Stapelfähigkeit der resultierenden Beschichtung aus, weisen aber den Nachteil einer hohen Formaldehyd-Emission von mit diesen Lacken beschichteten Finish-Folien und Endloskanten auf. Im Zuge immer strengerer gesetzlicher Auflagen in bezug auf die Formaldehyd-Emission von in der Möbelindustrie eingesetzten Finish-Folien besteht aber eine sehr große Nachfrage nach Finish-Folien mit einer geringeren Formaldehyd-Emission. Nachteilig ist ferner der zur Erzielung einer guten Haftung der Lacke auf der Folie erforderliche hohe Weichmacheranteil dieser Beschichtungsmittel, der ebenfalls zu Emissionen bei den in der Praxis üblichen Trocknungsbedingungen oder zu einer langsamen Emission aus dem Lackfilm führen kann.

Durch die Entwicklung spezieller, wasserabweisender Porendruckfarben sind auch Finish-Folien mit einer dreidimensionalen Porenstruktur verfügbar, die eine treffliche Imitation eines Holzfurniers darstellen (vgl. z.B. DE-OS 32 47 677, DE-OS 33 14 610 und DE-OS 30 24 391).

Zur Herstellung dieser Finish-Folien mit einer dreidimensionalen Porenstruktur werden die mit der wasserabweisenden Porendruckfarbe bedruckten Folien mit einem wäßrigen säurehärtenden Lack beschichtet, der ebenfalls neben einem Melaminharz ein wasserverdünnbares Polyesterharz oder ein Acrylatharz oder ein ethoxiliertes Glycerinderivat enthält. Aber auch diese wäßrigen Beschichtungsmittel weisen den Nachteil auf, daß unter den in der Praxis üblichen Trocknungsbedingungen neben Lösungsmitteln und Wasser auch andere Lackbestandteile, wie Weichmacher, Polyole oder deren Abbauprodukte, emittiert werden.

Außerdem weisen die in den Beispielen der DE-OS 33 14 610 beschriebenen, imprägnierten und beschichteten Dekorpapiere eine zu hohe Formaldehyd-Emission von mehr als 3,5 mg/hm$^2$, bestimmt nach DIN 52 368, auf. Schließlich weisen die mit diesen Beschichtungsmitteln lackierten Dekorpapiere eine nur unzureichende Beständigkeit gegenüber Haushaltschemikalien, wie z.B. gelösten Pulverkaffe, auf (bestimmt nach DIN 68 861, Teil 1).

Ferner sind aus der AT-A-342 170 wasserverdünnbare säurehärtende Lacke auf Basis veretherter Harnstoff-Formaldehyd-Harze und gesättigter ölfreier Polyester mit einer OH-Zahl von 250 bis 400 bekannt. Die in diesen säurehärtenden Lacken eingesetzten Polyester werden unter Verwendung von Polyolen, ggf. Diolen sowie von Glykolen mit einem Molekulargewicht zwischen 300 und 1000 hergestellt. Die Verwendung einer Mischung aus monomeren und/oder oligomeren Glykolen mit einem zahlenmittleren Molekulargewicht von kleiner gleich 200, Diolen mit 4 bis 10 C-Atomen pro Molekül sowie ggf. Polyolen zur Herstellung der Polyester ist in der AT-A-342 170 nicht beschrieben.

2

Die aus der AT-A-342 170 bekannten säurehärtenden Lacke werden zur Holzlackierung, beispielsweise zur Versiegelung von Parketten oder für offen- und geschlossenporige Möbelanstriche, eingesetzt. Die Verwendung dieser Lacke zur Beschichtung von Finish-Folien, Endloskanten und Holzwerkstoffen, wobei durch Kombination mit speziellen Druckfarben eine dreidimensionale Oberflächenstruktur erhalten wird, ist in dieser Schrift nicht beschrieben.

Weiterhin sind aus der noch nicht veröffentlichten Patentanmeldung DE 39 05 268 wäßrige säurehärtende Zweikomponentenlacke für die Beschichtung von Finish-Folien und Endloskanten bekannt, die außer wasserverdünnbaren Aminoplastharzen, Polyolen und ggf. einer selbstvernetzenden wäßrigen Polyacrylatdispersion einen oder mehrere Füllstoffe mit einer mittleren Teilchengröße von 0,015 bis 10 $\mu$m, einer maximalen Teilchengröße von $\leq$ 40 $\mu$m und einer Dichte von $\leq$ 2,9 g/cm$^3$ enthalten. Die dort beschriebenen Zweikomponentenlacke eignen sich aber - je nach eingesetztem Bindemittel - nicht zur Erzeugung einer dreidimensionalen Oberflächenstruktur.

Schließlich sind aus der noch nicht veröffentlichten Patentanmeldung DE 40 01 672 wäßrige säurehärtende Zweikomponentenlacke für die Beschichtung von Finish-Folien und Endloskanten bekannt, die neben einem Aminoplastharz einen hydroxylgruppenhaltigen Polyester enthalten. Die eingesetzten Polyester sind hergestellt worden unter Verwendung von 50 bis 100 Mol-%, bezogen auf Gesamtmenge an Carbonsäure, mindestens einer olefinisch ungesättigten, aliphatischen Dicarbonsäure und 5 bis 30 Mol-%, bezogen auf die Gesamtmenge an Alkohol, mindestens eines polymeren Glykols mit 2 bis 4 C-Atomen pro Glykolsegment und mit einem zahlenmittleren Molekulargewicht zwischen 300 und 1000. Auch diese Zweikomponentenlacke eignen sich nicht zur Erzeugung einer dreidimensionalen Oberflächenstruktur.

Der vorliegenden Erfindung liegt die Aufgabe zugrunde, wäßrige Beschichtungszusammensetzungen für die Beschichtung von Finish-Folien, Endloskanten und Holzwerkstoffen zur Verfügung zu stellen, die es - in Kombination mit speziellen und hierfür üblicherweise eingesetzten Druckfarben - ermöglichen, dreidimensionale Oberflächenstrukturen zu erzielen. Außerdem sollen diese wäßrigen Beschichtungszusammensetzungen emissionsarm trockenbar sein, d.h. daß unter den in der Praxis üblichen Trocknungsbedingungen außer Wasser, Lösungsmittel und den bei der Vernetzung freiwerdenden Kondensationsspaltprodukten keine weiteren Lackbestandteile emittiert werden sollen. Vor allem ist es wichtig, daß die Formaldehyd-Emission dieser Beschichtungszusammensetzungen sowohl nach der Beschichtung auf einer Folie bzw. Kante als auch nach der Verleimung dieser beschichteten Folien bzw. Kanten mit einer formaldehydarmen Spanplatte (Emissionsklasse E 1) einen Wert von 3,5 mg/h m$^2$, bestimmt nach DIN 52 368, nicht überschreitet. Eine weitere Anforderung besteht darin, daß die mit diesen wäßrigen Beschichtungszusammensetzungen lackierten Finish-Folien, Endloskanten und Holzwerkstoffe auch ohne eine weitere Überlakkierung gute Gebrauchseigenschaften, wie z.B. gute Beständigkeiten gegenüber verschiedenen Reagentien, z.B. Lebensmitteln, wie Pulverkaffee u.ä., aufweisen, wie dies in der DIN 68 861, Grupppe A gefordert wird.

Diese Aufgabe wird überraschenderweise durch wäßrige Beschichtungszusammensetzungen, enthaltend eine Lackkomponente I, die

A) eine oder mehrere wasserverdünnbare Melamin- und/oder Harnstoffharze

B) ein oder mehrere hydroxylgruppenhaltige Polyester sowie

C) ggf. Pigmente und/oder Füllstoffe sowie ggf. übliche Hilfs- und Zusatzstoffe und

D) ggf. Verdünnungsmittel

enthält und eine Lackkomponente II, die einen sauren Härtungskatalysator enthält, gelöst. Die als Komponente B eingesetzten Polyester sind dabei hergestellt worden aus

a) 30 bis 50 Mol-% einer Mischung aus

$a_1$) 50 bis 100 Mol-% mindestens einer gesättigten, aliphatischen Dicarbonsäure,

$a_2$) 0 bis 50 Mol-% mindestens einer olefinisch ungesättigten, aliphatischen Dicarbonsäure,

$a_3$) 0 bis 50 Mol-% mindestens einer aromatischen Dicarbonsäure,

$a_4$) 0 bis 50 Mol-% mindestens eines Diisocyanates

und

b) 70 bis 50 Mol-% einer Mischung aus

$b_1$) 10 bis 60 Mol-% mindestens eines monomeren und/oder oligomeren Glykols mit 2 bis 4 C-Atomen pro Glykolsegment und mit einem zahlenmittleren Molekulargewicht kleiner gleich 200,

$b_2$) 10 bis 60 Mol-% mindestens eines Diols mit 4 bis 10 C-Atomen pro Molekül, ausgenommen die als Komponente $b_1$ eingesetzten Glykole,

$b_3$) 0 bis 70 Mol-% mindestens eines Polyols mit im Mittel 3 bis 6 OH-Gruppen pro Molekül und mit einem zahlenmittleren Molekulargewicht kleiner gleich 1000,

mit der Maßgabe, daß sowohl die Summe der Anteile der Komponenten $a_1$ bis $a_4$ als auch die Summe der Anteile der Komponenten $b_1$ bis $b_3$ als auch die Summe der Anteile der Komponenten a und b jeweils für sich 100 Mol-% beträgt und die Polyester B eine OH-Zahl von 200 bis 1000 mg KOH/g, bevorzugt 200 bis 800 mg KOH/g, aufweisen.

Die Erfindung betrifft außerdem Verfahren zur Beschichtung von Finish-Folien und Endloskanten unter Verwendung dieser wäßrigen Beschichtungszusammensetzungen sowie die nach diesem Verfahren erhaltenen Finish-Folien und Endloskanten und deren Verwendung zur Verleimung mit Span- oder Hartfaserplatten.

Im folgenden werden nun zunächst die einzelnen Komponenten der erfindungsgemäßen wäßrigen Beschichtungszusammensetzung näher erläutert.

Bei den in der Lackkomponente I eingesetzten Melamin-Harzen (Komponente A) handelt es sich um allgemein bekannte, in der Regel veretherte Melamin-Aldehyd-Umsetzungsprodukte. Die Wasserverdünnbarkeit der Melaminharze hängt, abgesehen vom Kondensationsgrad, der möglichst niedrig sein sollte, von der Veretherungskomponente ab, wobei nur die niedrigsten Glieder der Alkanolreihe wasserlösliche Kondensate ergeben. Die größte Bedeutung haben die Hexamethoximethylmelaminharze. Bei Verwendung von Lösungsvermittlern können auch butanolveretherte Melaminharze in wäßriger Phase dispergiert werden.

Als Beispiele für geeignete Melamin-Harze seien die im Handel unter dem Markennamen Cymel® 325, 327, 303 (Hersteller: Dyno Cyanamid, Düsseldorf), Luwipal® 072, 066, LR 8839, LR 8789 (Hersteller: BASF AG, Ludwigshafen), Beetle® BE 3745 und BE 370 (Hersteller: BIP Chemicals Ltd., Großbritannien), Maprenal® MF 900, 904 und 910 (Hersteller: Hoechst AG), Cibamin® (Ciba AG, Schweiz), Resimene® 714, 745 und 747 (Monsanto) erhältlichen wasserlöslichen Melaminharze genannt. Bevorzugt eingesetzt werden Hexamethoximethylmelaminharze, wie z.B. Cymel® 325, 327, 303; Luwipal® 066 und Maprenal® MF 900.

Bei den in der Lackkomponente I eingesetzten Harnstoff-Harzen (Komponente A) handelt es sich ebenfalls um bekannte wasserverdünnbare Harnstoff-Aldehyd-Umsetzungsprodukte, bevorzugt wasserverdünnbare Harnstoff-Formaldehyd-Umsetzungsprodukte. Als Beispiele für geeignete Harze seien die im Handel unter dem Markennamen Dynomin® UM 15 (Hersteller: Norsk Spraengstof Industrie, Norwegen), Resamin® VHW 3525 (Hersteller: Hoechst AG) oder Plastopal® (Hersteller: BASF AG, Ludwigshafen) erhältlichen plastifizierten bzw. nicht plastifizierten Harnstoff-Formaldehyd-Umsetzungsprodukte genannt.

Die Melamin- und die Harnstoff-Harze können dabei einzeln oder im Gemisch als Komponente A eingesetzt werden. Der erfindungsgemäße Zweikomponentenlack enthält dabei die Komponente A üblicherweise in einer Menge von 15 bis 70 Gew.-%, bevorzugt 30 bis 55 Gew.-%, jeweils bezogen auf das Gesamtgewicht der Lackkomponente I, d.h. ohne Härterkomponente II.

Zur Vernetzung der Melamin- und/oder Harnstoffharze (Komponente A) enthalten die wäßrigen Beschichtungszusammensetzungen noch üblicherweise 10 bis 50 Gew.-%, bevorzugt 20 bis 35 Gew.-%, jeweis bezogen auf das Gesamtgewicht der Lackkomponente I, eines oder mehrerer hydroxylgruppenhaltiger Polyester (Komponente B).

Diese Polyester sind erfindungsgemäß aufgebaut aus

a) 30 bis 50 Mol-%, bevorzugt 30 bis 40 Mol-% Dicarbonsäuren und

b) 70 bis 50 Mol-%, bevorzugt 70 bis 60 Mol-% Di- und/oder Polyolen,

wobei die Dicarbonsäurekomponente a eine Mischung aus

$a_1$) 50 bis 100 Mol-%, bevorzugt 70 bis 100 Mol-%, mindestens einer gesättigten, aliphatischen Dicarbonsäure,

$a_2$) 0 bis 50 Mol-%, bevorzugt 0 bis 30 Mol-%, mindestens einer olefinisch ungesättigten, aliphatischen Dicarbonsäure,

$a_3$) 0 bis 50 Mol-%, bevorzugt 0 bis 30 Mol-%, mindestens einer aromatischen Dicarbonsäure und

$a_4$) 0 bis 50 Mol-%, bevorzugt 0 bis 30 Mol-%, mindestens eines Diisocyanates und die Di- und/oder Polyolkomponente b eine Mischung aus

$b_1$) 10 bis 60 Mol-%, bevorzugt 20 bis 45 Mol-%, mindestens eines monomeren und/oder oligomeren Glykols mit 2 bis 4 C-Atomen pro Glykolsegment und mit einem zahlenmittleren Molekulargewicht kleiner gleich 200,

$b_2$) 10 bis 60 Mol-%, bevorzugt 20 bis 45 Mol-%, mindestens eines Diols mit 4 bis 10 C-Atomen pro Molekül, ausgenommen die als Komponente $b_1$ eingesetzten Glykole,

$b_3$) 0 bis 70 Mol-%, bevorzugt 30 bis 50 Mol-%, mindestens eines Polyols mit im Mittel 3 bis 6 OH-Gruppen pro Molekül und mit einem zahlenmittleren Molekulargewicht kleiner gleich 1000

ist, mit der Maßgabe, daß sowohl die Summe der Anteile der Komponente $a_1$ bis $a_4$ als auch die Summe der Anteile der Komponenten $b_1$ bis $b_3$ als auch die Summe der Anteile der Komponenten a und b jeweils für sich 100 Mol-% beträgt und die Polyester B eine OH-Zahl von 200 bis 1000 mg KOH/g, bevorzugt 200 bis 800 mg KOH/g, aufweisen.

Als Komponente $a_1$ geeignet sind alle gesättigten, aliphatischen Dicarbonsäuren mit im allgemeinen 4 bis 32 C-Atomen, bevorzugt mit 4 bis 10 C-Atomen. Bevorzugt wird eine Mischung aus diesen aliphatischen Dicarbonsäuren eingesetzt. Beispiele für geeignete gesättigte, aliphatische Dicarbonsäuren sind Malonsäure, Bernsteinsäure, Glutarsäure` Adipinsäure, Pimelinsäure, Suberinsäure, Acelainsäure, Sebacinsäure

4

sowie längerkettige Dicarbonsäuren, wie z.B. Dimerfettsäuren.

Bevorzugt werden Adipinsäure, Bernsteinsäure, Glutarsäure eingesetzt. Besonders bevorzugt wird eine Mischung dieser drei Carbonsäuren eingesetzt. Diese Säuren können in Form der freien Säuren oder ihrer veresterungsfähigen Derivate (z.B. Anhydride) oder ihrer umesterungsfähigen Derivate (z.B. Dimethylester) eingesetzt werden.

Als Komponente $a_2$ geeignet sind alle olefinisch ungesättigten aliphatischen Dicarbonsäuren wie z.B. Maleinsäure, Fumarsäure, Itaconsäure und Citraconsäure. Bevorzugt eingesetzt wird Maleinsäure. Diese Säuren können in Form der freien Säuren oder ihrer veresterungsfähigen Derivate (z.B. Anhydride) eingesetzt werden.

Als Komponente $a_3$ geeignet sind alle aromatischen Dicarbonsäuren, beispielsweise Phthalsäure, Isophthalsäure, Terephthalsäure, Naphthalindicarbonsäuren u.ä. Bevorzugt werden aromatische Dicarbonsäuren eingesetzt, die nicht orthoständig substituiert sind. Besonders bevorzugt werden Phthalsäure und Isophthalsäure sowie deren Mischungen eingesetzt. Diese Säuren können in Form der freien Säuren, ihrer veresterungsfähigen Derivate (z.B. Anhydride) oder ihrer umesterungsfähigen Derivate (z.B. Dimethylester) eingesetzt werden.

Als Komponente $a_4$ geeignet sind sowohl aromatische als auch aliphatische Diisocyanate, wie beispielsweise Toluylendiisocyanate, 4,4-Diphenylmethandiisocyanat, 4,4-Dicyclohexylmethandiisocyanat, Isophorondiisocyanat, Hexamethylendiisocyanat, Xylylendiisocyanat, Methylcyclohexyldiisocyanat, Trimethylhexamethylendiisocyanat und 1,6-Hexandiisocyanat.

Beispiele für geeignete monomere oder oligomere Glykole mit 2 bis 4 C-Atomen pro Glykolsegment und zahlenmittleren Molekulargewichten $\leq$ 200 (Komponente $b_1$) sind beispielsweise Ethylenglykol, Propylenglykol-1,2 und -1,3, 1,3-Butylenglykol, Butandiol-1,4, Diethylenglykol, Triethylenglykol, Tetraethylenglykol u. ä. Bevorzugt eingesetzt werden monomere oder oligomere lineare Glykole mit 2 C-Atomen pro Glykolsegment und zahlenmittleren Molekulargewichten $\leq$ 200. Besonders bevorzugt ist Triethylenglykol.

Als Komponente $b_2$ geeignet sind Diole mit 4 bis 10 C-Atomen pro Molekül, ausgenommen die als Komponente $b_1$ eingesetzten Glykole. Bevorzugt werden verzweigte, gesättigte, aliphatische und/oder cycloaliphatische Diole eingesetzt. Besonders bevorzugt sind hydroxialkylsubstituiertes Cyclohexan und Cyclohexanderivate.

Beispiele für als Komponente $b_2$ geeignete Diole sind Hexandiol-1,6, Neopentylglykol, 2,2,4-Trimethyl-1,3-pentandiol, 1,4-Dimethylolcyclohexan und Hydroxipivalinsäureneopentylglykolester.

Besonders bevorzugt eingesetzt wird 1,4-Dimethylolcyclohexan.

Als Komponente $b_3$ geeignet sind Polyole mit im Mittel 3 bis 6 OH-Gruppen pro Molekül und mit einem zahlenmittleren Molekulargewicht kleiner gleich 1000, bevorzugt kleiner gleich 400. Bevorzugt werden Polyole mit im Mittel 3 bis 4 OH-Gruppen und besonders bevorzugt Triole eingesetzt. Beispiele für geeignete Polyole sind Glycerin, Trimethylolpropan, Trimethylolethan, Pentaerythrit, Ditrimethylolpropan, Diglycerin sowie deren durch Alkoxilierung, bevorzugt Ethoxilierung und Propoxilierung, erhältlichen Derivate sowie Mischungen dieser Verbindungen.

Diese hydroxylgruppenhaltigen Polyester können nach den üblichen Verfahren (vgl. z.B. Houben Weyl, Methoden der organischen Chemie, 4. Auflage, Band 14/2, Georg Thieme Verlag, Stuttgart 1961) hergestellt werden. Sie weisen Hydroxylzahlen zwischen 200 und 1000 mgKOH/g, bevorzugt 200 bis 800 mgKOH/g sowie im allgemeinen zahlenmittlere Molekulargwichte zwischen 250 und 700, bevorzugt zwischen 300 und 600 auf. Die eingesetzten Polyester sind üblicherweise flüssig und weisen im allgemeinen eine möglichst niedrige Viskosität auf.

Die Lackkomponente I kann außerdem eine wäßrige selbstvernetztende Polyacrylatdispersion enthalten. Diese wäßrigen selbstvernetzenden Polyacrylatdispersionen werden üblicherweise in einer Menge von 0 - 10 Gew.-%, bevorzugt 2 bis 5 Gew.-%, jeweils bezogen auf das Gesamtgewicht der Lackkomponente I, eingesetzt. Die Polyacrylatharze enthalten als die Selbstvernetzung ermöglichende Gruppen Säureamidderivatgruppen, die der allgemeinen Strukturformel $-CO-N(R^1)-CH(R^2)-OR^3$ entsprechen, wobei

$R^1$ = H-Atom oder eine $-CH(R^2)-OR^3$-Gruppierung,

$R^2$ = H-Atom oder eine $-COOR^4$-Gruppe,

$R^3$ = H-Atom oder ein 1 bis 10 C-Atome enthaltender Kohlenwasserstoffrest, bevorzugt Methyl-, Ethyl-, (iso)-Propyl- oder (iso)-Butylrest,

$R_4$ = Alkylrest mit 1 bis 5 C-Atomen

bedeuten.

Die $-CO-N(R^1)-CH(R^2)-OR^3$-Gruppen können sowohl über ein einpolymerisiertes Monomer als auch über eine polymeranaloge Umsetzung in die Polyacrylatmoleküle eingeführt worden sein. Bevorzugt werden die $-CO-N(R^1)-CH(R^2)-OR^3$-Gruppen, in den $R^1$ und $R^2$ Wasserstoffatome und $R^3$ ein Wasserstoffatom oder ein Alkylrest mit 1 bis 4 C-Atomen, bevorzugt Methyl-, Ethyl-, (iso)Propyl- oder (iso-)Butyl bedeuten.

EP 0 541 635 B1

Die selbstvernetzbaren Polyacrylatharze können neben den oben beschriebenen Säureamidderivatgruppen auch Carboxylgruppen enthalten. Der Fachmann kann mit Hilfe einiger weniger orientierender Versuche feststellen, welcher Carboxylgruppengehalt er für seine jeweils vorliegende Problemstellung zu wählen hat.

Das Polyacrylatharz kann neben den Säureamidderivat- und Carboxylgruppen auch noch weitere funktionelle Gruppen, wie z.B. Hydroxylgruppen oder freie Amidgruppen, enthalten.

Die einsetzbaren wäßrigen Acrylatdispersionen können nach allgemein bekannten Methoden durch Copolymerisation von (Meth)acrylsäureestern, bevorzugt Methyl-, Ethyl-, Propyl- oder Butyl(meth)acrylaten, den entsprechenden (Meth)acrylsäureamidderivaten und ggf. einer entsprechenden Menge an Carboxylgruppen tragenden, eine polymerisierbare Doppelbindung enthaltenden Monomeren, z.B. Fumar- oder Maleinsäure, bevorzugt (Meth-)acrylsäure unter eventueller Mitverwendung geringerer Mengen weiterer Monomere, wie z.B. Vinylacetat, Hydroxialkyl(meth-)acrylaten, Styrol, (Meth)acrylsäureamiden usw., hergestellt werden. Bevorzugt werden Dispersionen mit folgenden Kenndaten eingesetzt:

- Festkörper: 40 bis 60 Gew.-%, vorzugsweise 40 bis 50 Gew.-%, bezogen auf das Gesamtgewicht der wäßrigen Polyacrylatdispersion.
- Mittlerer Teilchendurchmesser: 0,1 bis 0,5 $\mu$m, vorzugsweise 0,1 bis 0,3 $\mu$m.
- Minimale Filmbildungstemperatur (MFT): 0 bis 70°C, vorzugsweise zwischen 20 und 60°C.
- Viskosität: 200 bis 5.000 mPas, vorzugsweise 200 bis 1.000 mPas und
- pH-Wert: 2 bis 10, vorzugsweise größer 7.

Zum richtigen Einstellen der zweckmäßigen Verarbeitungsviskositäten können sowohl die Lackkomponente I als auch II noch flüssige Verdünnungsmittel enthalten. Geeignete flüssige Verdünnungsmittel bestehen zu mindestens 50 Gew.-%, bevorzugt zu 95 bis 100 Gew.-%, bezogen auf die Summe der Gewichtsanteile aller flüssigen Verdünnungsmittel, aus Wasser. Daneben können auch noch organische Lösungsmittel, wie z.B. ein- oder mehrwertige Alkohole, Ether, Futer und Ketone, wie N-Methylpyrrolidon, Butanol, Isopropanol, Ethanol, Ethyl- und Butylglykol sowie deren Acetate, Butyldiglykol, Ethylenglykoldibutylether, Ethylenglykoldiethylether, Diethylenglykoldimethylether, Cyclohexanon, Methylethylketon, Aceton, Isophoron, Propylenglykol oder Mischungen davon enthalten sein. Die Menge an eingesetztem Verdünnungsmittel beträgt i.a. für die Lackkomponente I 0 bis 20 Gew.-%, bezogen auf das Gesamtgewicht aller Komponenten der Lackkomponente I. Die Lackkomponente II enthält üblicherweise 30 bis 80 Gew.-%, bezogen auf das Gesamtgewicht der Lackkomponente II, Verdünnungsmittel.

Als Härterkomponente (Lackkomponente II) enthält die erfindungsgemäße wäßrige Beschichtungszusammensetzung eine wasserverdünnbare Säure, deren wäßrige Lösung oder eine mit Aminen oder Aminoalkoholen geblockte Säure oder deren wäßrige Lösung. Als wasserverdünnbare Säuren kommen Phosphorsäure, Maleinsäure, Salzsäure, para-Toluolsulfonsäure und ihre Derivate, Naphthalinsulfonsäure und deren Derivate sowie die entsprechenden Umsetzungsprodukte dieser Säuren mit Aminen oder Aminoalkoholen, wie beispielsweise eine wäßrige Lösung des Ammoniumsalzes der p-Toluolsulfonsäure zum Einsatz. Als Amin bzw. Aminoalkohol werden z.B. Morpholin, Dimethylethanolamin, Aminomethylpropanol und Aminoethylpropandiol eingesetzt. Bei der Formulierung der erfindungsgemäßen Beschichtungszusammensetzungen als Einkomponentensystem werden die Sulfonsäuren in geblockter Form, beispielsweise als Ammoniumsalz, eingesetzt. Außerdem kann die Härterkomponente II Substanzen enthalten, die mit Formaldehyd Additionsreaktionen eingehen, wie z.B. Harnstoff, Thioharnstoff, Ethylenharnstoff oder Dicyandiamid. Diese Substanzen werden üblicherweise in einer Menge von 0 bis 40 Gew.-%, bezogen auf das Gesamtgewicht der Lackkomponente II, eingesetzt.

Bevorzugt eingesetzt werden para-Toluolsulfonsäure, Salzsäure und Phosphorsäure, wobei para-Toluolsulfonsäure besonders bevorzugt ist. Der Einsatz von Lösungen von para-Toluolsulfonsäure in säurestabilen Acrylatdispersionen als Härterkomponente weist den Vorteil auf, daß die Oberflächeneigenschaften, insbesondere die Flächenüberspannung, verbessert wird. Um eine möglichst gleichmäßige Verteilung dieses Härtungskatalysators in den Beschichtungszusammensetzungen zu erzielen, werden die Säuren oder ihre Derivate bevorzugt als Lösung in Wasser oder einem wasserverdünnbaren Lösungsmittel eingesetzt.

Die Lackkomponenten I und II werden vor der Applikation in einem solchen Verhältnis gemischt, daß auf 100 Gewichtsteile der Lackkomponente I, bestehend aus den Komponenten A bis C (d.h. ohne Verdünnungsmittel), üblicherweise 0,5 bis 50 Gewichtsteile der reinen Härterkomponente II, d.h. Lackkomponente II ohne Verdünnungsmittel, kommen. Die Topfzeit (Zeit während der das Gemisch verarbeitbar ist) des erhaltenen Gemisches hängt beispielsweise von der Art und Konzentration der Härterkomponente und der Verarbeitungstemperatur ab. Entsprechend den Anforderungen der Folienhersteller liegen die Topfzeiten der Gemische über 24 h. Die Lackkomponenten I und II sind dagegen getrennt länger als 2 Monate stabil.

In den erfindungsgemäßen wäßrigen Beschichtungszusammensetzungen können auch noch übliche Hilfs- und Zusatzstoffe in den üblichen Mengen enthalten sein, wie beispielsweise 0 bis 10 Gew.-%,

bevorzugt 0 bis 3 Gew.-%, Mattierungsmittel (Kieselsäurederivate...), 0 bis 2 Gew.-%, bevorzugt 0,5 bis 1,0 Gew.-%, Wachse (z.B. Polyethylen- und Polypropylenwachse), 0 bis 2,0 Gew.-%, bevorzugt 0,5 bis 1,0 Gew.-%, Emulgator (ethoxilierte Alkylphenole, ethoxilierte Fettsäuren), 0 bis 2,0 Gew.-%, bevorzugt 0,5 bis 1,0 Gew.-%, Entschäumer sowie 0 bis 10 Gew.-%, bevorzugt 0 bis 3 Gew.-% weiterer Additive, wie Weichmacher (ethoxiliertes Glycerin.....), Thixotropierungsmittel (Polyacrylate, Polyurethane, Cellulose-Derivate...), Verlaufs- und Benetzungsmittel (Natriumsalze von Polyacrylaten...) sowie Filmbildehilfsmittel (Phosphorsäureester, Glykole). Die Gewichtsprozentangaben beziehen sich jeweils auf die Gesamtzusammensetzung der Lackkomponente I, also einschließlich evtl. anwesendem Verdünnungsmittel.

Die Herstellung der Lackkomponenten I und II erfolgt in üblicher Weise durch Vermischen der Komponenten. Mitunter ist es angezeigt, eine Komponente, falls sie nicht in flüssiger Form anliegt, zunächst in einem Lösungsmittel zu lösen und diese Lösung mit den übrigen Komponenten zu vermischen.

Die vorstehend beschriebene wäßrige Beschichtungszusammensetzung läßt sich auch pigmentieren, wobei dann die Lackkomponente I im allgemeinen 0 bis 40 Gew.-%, bevorzugt 0 bis 30 Gew.-%, jeweils bezogen auf das Gesamtgewicht der Lackkomponente I, Pigment enthält. Der jeweils optimale Pigmentgehalt hängt von der gewünschten Deckfähigkeit und dem eingesetzten Pigment ab und kann vom Durchschnittsfachmann mit Hilfe von einfach durchzuführenden Routineuntersuchungen gefunden werden.

Zur Einarbeitung der Pigmente können einerseits die verschiedenen Pigmente mit dem Bindemittel zusammen angemahlen werden oder die Lackkomponente I wird als Auflackgut für eine wäßrige Pigmentpaste verwendet.

Als Pigmente können alle anorganischen und organischen Pigmente eingesetzt werden, die sowohl wasserbenetzbar als auch bei den angewandten Temperaturen nicht sublimierbar sind und die sich unter den Verfahrens- und pH-Bedingungen nicht im Farbton verändern.

Beispiele für geeignete Pigmente sind Titandioxid des Rutiltyps, gelbe, rote und schwarze Eisenoxide, Ruß und Phthalocyanine. Bevorzugt wird Titandioxid als Pigment eingesetzt.

Weiterhin können den erfindungsgemäßen wäßrigen Zweikomponentenlacken, falls erforderlich, auch Füllstoffe, wie z.B. Kieselsäure, verschiedene Talkum-, Glimmer- und Kaolin-Typen sowie andere aluminium- und/oder magnesiumhaltige Silikate, Bariumsulfat usw., zugefügt werden. Die Füllstoffe werden in üblichen Mengen, bevorzugt zwischen 3 bis 7 Gew.-%, bezogen auf das Gesamtgewicht der Lackkomponente I eingesetzt.

Die Beschichtung der Finish-Folien und Endloskanten mit den erfindungsgemäßen wäßrigen Zweikomponentenlacken erfolgt mit eigens dafür entwickelten Maschinen. Als Lackauftrags- bzw. -dosiereinrichtungen stehen Rasterwalzen oder Drahtrakeln zur Verfügung. Die Lackauftragsmenge liegt üblicherweise zwischen 5 bis 50 g/m² bei einer Naßfilmschichtdicke von 10 bis 80 μm. Zur Lacktrocknung werden üblicherweise Trockenkanäle mit beheizter Luft, sogerannte Konvektoren oder IR-Strahler oder Kombinationen aus beiden oder heiße Walzen (Kalander) eingesetzt. Die Papierbahn wird nach der Trocknung als Rolle aufgewickelt und in dieser Form an die Möbelindustrie geliefert.

Sobald das Gemisch aus der Lackkomponente (I) und der Härterkomponente (II) appliziert worden ist und auf eine Temperatur von 140 bis 210°C gebracht worden ist, härtet es innerhalb von 10 bis 20 Sekunden ohne Blasenbildung so weit aus, daß die dabei entstandenen Lackflächen die weiteren Verfahrensschritte - insbesondere die in steigendem Maß angewandten verschärften Preßbedingungen - ohne Blockeigenschaften oder Verfärbungen zu zeigen schadlos überstehen.

Die in Rede stehenden wäßrigen Beschichtungszusammensetzungen sind auch zur Lackierung von Holzsubstraten, wie z.B. Hartfaserplatten, Spanplatten und Holzwerkstoffen, geeignet.

Die erfindungsgemäßen wäßrigen Zweikomponentenlacke ermöglichen in Verbindung mit hydrophoben Porendruckfarben zum Bedrucken von Dekorpapieren die Imitation eines Echtholzfurniers dadurch, daß sie, wie beispielsweise in der DE-OS 30 24 391 beschrieben, beim Beschichten des bedruckten Dekorpapiers zu einer dreidimensionalen Oberflächenstruktur führen.

Die unter Verwendung der erfindungsgemäßen Zweikomponentenlacke hergestellten Folien und Endloskanten weisen insbesondere den Vorteil auf, daß sie eine sehr geringe Formaldehyd-Emission von weniger als 3,5 mg/hm² zeigen. Auch im Verbund mit Spanplatten, insbesondere solchen der Emissionsklasse E1, zeigen sie eine außerordentlich geringe Formaldehyd-Emission von ≤ 3,5 mg/hm² (Emission jeweils bestimmt nach DIN 53268).

Vorteilhaft ist ferner, daß die unter Verwendung der erfindungsgemäßen Zweikomponentenlacke hergestellten Überzüge emissionsarm getrocknet werden können und dabei Filme mit guten Gebrauchseigenschaften, insbesondere mit guter Beständigkeit gegenüber verschiedenen Reagentien (bestimmt nach DIN 68 861, Gruppe A), wie z.B. gelöstem Pulverkaffee, ergeben.

Die vorliegende Erfindung wird nun anhand von Ausführungsbeispielen näher erläutert. Falls nicht ausdrücklich etwas anderes angegeben ist, sind alle Angaben über Teile und Prozentsätze Gewichtsangaben.

## 1. Herstellung von hydroxylgruppenhaltigen Polyestern

Aus den in Tabelle 1 angegebenen Komponenten werden nach den üblichen Verfahren die hydroxylgruppenhaltigen Polyester 1 bis 3 sowie zum Vergleich die Polyester V1 bis V11 hergestellt, indem die einzelnen Komponenten zusammen mit 0,05 Gew.-% Dibutylzinnoxid als Um- bzw. Veresterungskatalysator sowie bei maleinsäure(anhydrid) haltigen Polyestern mit 0,1 Gew.-% Hydrochinon als Stabilisator in einem mit Rührer, Stickstoffzufuhr und beheizter Füllkörperkolonne ausgestatteten Reaktor innerhalb von 6 h auf 200 ° C erhitzt werden. Entstehendes Reaktionswasser beim Einsatz von Maleinsäure(anhydrid) (Vergleichsversuche 1, 2, 3, 5, 6, 8 und 9) bzw. Methanol beim Einsatz der Dimethylester der Bernstein-, Glutar- und Adipinsäure (Beispiele 1 bis 3 sowie Vergleichsversuche 4, 7, 10 und 11) wird abdestilliert. Die Veresterung bzw. Umesterung wird solange bei 200 ° C fortgesetzt, bis die in Tabelle 2 angegebenen Kennzahlen erreicht sind.

## 2. Herstellung der Härterkomponente (Lackkomponente II)

### 2.1 Herstellung der Härterkomponente 1

40 Teile para-Toluolsulfonsäure werden unter Rühren in 60 Teilen Wasser gelöst.

### 2.2 Herstellung der Härterkomponente 2

40 Teile para-Toluolsulfonsäure werden unter Rühren in 45 Teilen Wasser gelöst. Die Lösung wird mit einer Mischung von 15 Teilen Aminomethoxipropanol/Wasser (2 : 1) versetzt.

### Beispiel 1

Zunächst wird folgendermaßen eine Lackkomponente I-1 hergestellt:

40 Teile eines 100 %igen Hexamethoximethylmelamin-Harzes mit einer Viskosität von 3000 mPas (21 ° C), 3 Teile Methoxipropanol, 48 Teile des Polyesterpolyols 3, 0,5 Teile eines mikronisierten Polypropylenwachses (Schmelzpunkt 140 ° C), 5,5 Teile Wasser und 3,0 Teile einer gefällten Kieselsäure mit einer durchschnittlichen Teilchengröße von 4 $\mu$m werden unter Rühren vermischt.

100 Teile der so hergestellten Lackkomponente I-1 werden unter Rühren mit 10 Teilen der Härterkomponente 1 versetzt.

Der so erhaltene Foliendeckstrich wird mit entionisiertem Wasser auf eine Viskosität von 20 s im 4 mm Auslaufbecher (DIN 53 211) eingestellt und dann mittels eines Drahtrakels auf ein weißes Imprägnat mit einem Gewicht von 75 g/m$^2$ aufgetragen (Naßfilmstärke 30 $\mu$m) und anschließend 20 s bei 160 ° C im Düsenkanal getrocknet. Derselbe Lack wurde mittels eines Drahtrakels auf ein braunes Vorimprägnat (Dekor Eiche, Gewicht 60 g/m$^2$), bedruckt mit einer Porendruckfarbe (beschrieben in DE-OS-33 146 10), aufgetragen (Naßfilmstärke 20 $\mu$m) und anschließend 20 s bei 160 ° C im Düsenkanal getrocknet. Die so hergestellten Möbelfolien wurden in 30 s bei 5kp/150 ° C auf eine Spanplatte unter Verwendung eines Harnstoffleims verpreßt. Die Beurteilung der Porenzeichnung und die Beurteilung der Resistenz gegenüber gelöstem Pulverkaffee (DIN 68861 Teil 1 A) wurde mit Hilfe der so hergestellten Muster vorgenommen. Die Ergebnisse sind in den Tabellen 3 und 4 dargestellt. Die Beurteilung der zusätzlichen Emissionen in Form von einer Rauchbildung wurde folgendermaßen vorgenommen: Ein oben beschriebenes Imprägnat, weiß (DIN A4-Format) wurde mittels eines Drahtrakels mit den genannten Lacken beschichtet (Naßfilmstärke 30 $\mu$m) und in einem Trockenschrank ohne Umluft (Temperatur 180 ° C, Innenvolumen 25 l) überführt. Nach 60 s wurde die Tür des Trockenschrankes geöffnet und die Rauchbildung gegen eine beleuchtete, schwarze Wand beurteilt (siehe Tabellen 3 und 4). Die Formaldehydemission der mit den Beispiellacken beschichteten Vorimprägnate (Naßfilmstärke 20 $\mu$m) wurde gemäß DIN 52368 bestimmt (siehe Tabelle 3).

Beispiel 2

Zunächst wird folgendermaßen eine Lackkomponente I-2 hergestellt:

45 Teile des in Beispiel 1 beschriebenen 100 %igen Hexamethoximethylmelamin-Harzes, 1 Teil Methoxipropanol, 7,5 Teile Wasser, 0,5 Teile des in Beispiel 1 beschriebenen Wachses, 1 Teil der in Beispiel 1 beschriebenen Kieselsäure und 46 Teile des Polyesterpolyols 2 werden unter Rühren vermischt. Die weitere Herstellung des Foliendeckstrichs 2, die Applikation und Aushärtung erfolgen analog Beispiel 1. Die Ergebnisse der Prüfung der Eigenschaften der beschichteten Folie sind ebenfalls in der Tabelle 3 dargestellt.

Beispiel 3

Zunächst wird folgendermaßen eine Lackkomponente I-3 hergestellt:

62 Teile eines weitgehend mit Methanol veretherten, wasserverdünnbaren Melamin-Formaldehyd-Harzes (nicht flüchtiger Anteil 2h/125 °C 85 %, Viskosität bei 23 °C 2.4-3.6 Pas), 3 Teile Butylglykol, 20 Teile des Polyesterpolyols 2, 3 Teile einer 35 %igen Polyethylenwachsemulsion (pH-Wert 9, Dichte 1 g/cm$^3$) und 2 Teile einer oberflächenbehandelten Kieselsäure mit einer Sekundärteilchengröße von 1 - 8 $\mu$m (SiO$_2$-Gehalt > 87 %) werden unter Rühren vermischt.
Die weitere Herstellung des Foliendeckstrichs 3, die Applikation und Aushärtung erfolgen analog Beispiel 1. Die Ergebnisse der Prüfung der Eigenschaften der beschichteten Folie sind ebenfalls in den Tabellen 3 und 4 dargestellt.

Beispiel 4

Zunächst wird folgendermaßen eine Lackkomponente I-4 hergestellt:

15 Teile des in Beispiel 1 beschriebenen Melaminharzes, 38 Teile eines 90 %igen iminogruppenhaltigen, methylierten Melamin-Formaldehyd-Harzes mit einer Dichte von 1,18 g/cm$^3$ und einer Viskosität von 41 - 120 Poise, 30 Teile des Polyesterpolyols 1, 0,5 Teile Tributylphosphat, 9 Teile Wasser und 2,5 Teile einer amorphen Kieselsäure mit einer mittleren Teilchengröße von 3 $\mu$m werden unter Rühren vermischt. Die erhaltene Mischung wird dann unter Rühren mit 5 Teilen einer wäßrigen, amidgruppenhaltigen, selbstvernetzenden anionischen Acrylatdispersion (mittlere Teilchengröße 0,25 $\mu$m, Viskosität bei 23 °C 200 mPas, Festkörper ca. 50 %) versetzt.
Die weitere Herstellung des Foliendeckstrichs 4, die Applikation und Aushärtung erfolgen analog Beispiel 1. Die Ergebnisse der Prüfung der Eigenschaften der beschichteten Folie sind in der Tabelle 3 dargestellt.

Beispiel 5

Es wird analog zu Beispiel 2 ein Foliendeckstrich 5 hergestellt, allerdings mit dem Unterschied, daß anstelle der Härterkomponente 1 als Lackkomponente II-5 nun die Härterkomponente 2 verwendet wird. Die Herstellung des Foliendeckstrichs 5, die Applikation und Aushärtung erfolgen analog Beispiel 2. Die Ergebnisse der Prüfung der Eigenschaften der beschichteten Folie sind in der Tabelle 3 dargestellt.

Vergleichsbeispiele 1 bis 11

Es werden analog Beispiel 3 verschiedene Lackkomponenten I - V1 bis I-V11 hergestellt, allerdings mit dem Unterschied, daß statt 20 Teilen des Polyesters 2 nun 20 Teile der Polyester V1 bis V11 eingesetzt werden.
Die weitere Herstellung der Foliendeckstriche, die Applikation und Aushärtung erfolgen analog Beispiel 3. Die Ergebnisse der Prüfung der Eigenschaften der beschichteten Folien sind in der Tabelle 4 dargestellt.

Vergleichsbeispiel 12

Es wird analog zu dem Beispiel des Lacks I der DE-OS 33 146 10 ein Foliendeckstrich V 12 folgendermaßen hergestellt: Zunächst wird eine Lackkomponente I-V 12 folgendermaßen hergestellt: 62,1 Teile Maprenal® MF 920/95 %ig (Melaminharz, Handelsprodukt der Hoechst AG), 15,0 Teile Acronal® 240 D/40 %ig (Acrylatharz, Handelsprodukt der BASF AG), 12,0 Teile 1,6-Hexandiol/80 %ig (Handelsprodukt der BASF AG), 2,5 Teile Syloid® 166 (Mattierungsmittel auf Basis Kieselsäure, Handelsprodukt der Grace), 1,25 Teile Paste Bentone® EW/5 %ig (Handelsprodukt der Kronos Titan), 3,0 Teile Methoxibutanol, 0,5 Teile Surfynol® TG (Pigmentbenetzungsmittel der Air Products USA) und 0,75 Teile Lösung Etingal A/10 %ig (Antischaummittel auf Basis Phosphorsäureester, Handelsprodukt der BASF AG) werden unter Rühren vermischt. 100 Teile der so hergestellten Lackkomponente I-V 12 werden unter Rühren mit 5,3 Teilen einer 50 %igen Lösung von para-Toluolsulfonsäure in Wasser versetzt. Die Applikation und Aushärtung des Foliendeckstriches erfolgen wie in Beispiel 1 beschrieben. Die Ergebnisse der Prüfung der Eigenschaften der beschichteten Folie sind in der Tabelle 4 dargestellt.

Vergleichsbeispiel 13

Es wird analog Beispiel 2 der nicht vorveröffentlichten Patentanmeldung DE 39 052 68 ein Foliendeckstrich hergestellt.

Dazu wird zunächst folgendermaßen eine Lackkompnente I-V 13 hergestellt:

30 Teile eines wasserverdünnbaren, elastischen Harnstoff-Formaldehyd-Harzes(Säurezahl < 3 mgKOH/g) und 20 Teile eines wasserverdünnbaren, weitgehend mit Methanolveretherten Melamin-Formaldehyd-Harzes (Festkörper 80 - 85 %, Viskosität bei 23°C 1,6-2,4 Pas), 35 Teile eines wasserverdünnbaren, teilweise ungesättigten Polyesterpolyols (OH-Zahl 420 mg/KOH/g, Säurezahl < 5 mgKOH/g), 6 Teile eines Kaolins (mittlere Teilchengröße von 0,80 $\mu$m, maximale Teilchengröße 35 $\mu$m, Dichte 2,6 g/cm$^3$), 2 Teile eines Talkums (mittlere Teilchengröße von 5 $\mu$m, maximale Teilchengröße 25 $\mu$m, Dichte 2,8 g/cm$^3$), 2 Teile und 1 Teil eines nichtionischen Emulgators (Acryl-Polyglykol-Ether, Dichte 1,12 g/cm$^3$) werden unter Rühren vermischt.

Die weitere Herstellung des Foliendeckstriches, die Applikation und Aushärtung erfolgen analog Beispiel 3. Die Ergebnisse der Prüfung der Eigenschaften der beschichteten Folie sind in der Tabelle 4 dargestellt.

Tabelle 1: Zusammensetzung der Polyester 1 bis 3 und V1 bis V11 in Molen

| | 1 | 2 | 3 | V1 | V2 | V3 | V4 | V5 | V6 | V7 | V8 | V9 | V10 | V11 |
|---|---|---|---|---|---|---|---|---|---|---|---|---|---|---|
| Maleins.[1] | - | - | - | 1,0 | 1,0 | 1,0 | - | 1,0 | 1,0 | - | 1,0 | 1,0 | - | - |
| Bernst.[2] | 0,25 | 0,25 | 0,25 | - | - | - | 0,25 | - | - | 0,25 | - | - | 0,25 | 0,25 |
| Glutars.[3] | 0,5 | 0,5 | 0,5 | - | - | - | 0,5 | - | - | 0,5 | - | - | 0,5 | 0,5 |
| Adipins.[4] | 0,25 | 0,25 | 0,25 | - | - | - | 0,25 | - | - | 0,25 | - | - | 0,25 | 0,25 |
| TEG[5] | 0,5 | 1,0 | 0,25 | 2,0 | - | 1,0 | 1,0 | 1,5 | 1,0 | - | 2,0 | 1,5 | 2,0 | - |
| Gly [6] | 1,0 | - | 1,25 | - | 2,0 | 1,0 | 1,0 | - | - | 2,0 | - | - | - | - |
| DMC [7] | 0,5 | 1,0 | 0,5 | - | - | - | - | 0,5 | - | - | - | - | - | 2,0 |
| TMPD[8] | - | - | - | - | - | - | - | - | 1,0 | - | - | - | - | - |
| TEA[9] | - | - | - | - | - | - | - | - | - | - | - | 0,5 | - | - |

EP 0 541 635 B1

Erläuterungen zu Tabelle 1

1)    Maleinsäure
2)    Bernsteinsäure
3)    Glutarsäure
4)    Adipinsäure
5)    Triethylenglykol
6)    Glycerin
7)    1,4-Dimethylolcyclohexan
8)    2,2,4-Trimethyl-1,3-pentandiol
9)    Triethanolamin

Tabelle 2: Kennzahlen der Polyester 1 bis 3 und V1 bis V11

| | 1 | 2 | 3 | V1 | V2 | V3 | V4 | V5 | V6 | V7 | V8 | V9 | V10 | V11 |
|---|---|---|---|---|---|---|---|---|---|---|---|---|---|---|
| Festkörper (1h/130°C) | 86 | 78 | 82 | 82 | > 95 | > 95 | 83 | 87 | 81 | 88 | 85 | 85 | 78 | 81 |
| Säurezahl (mgKOH/g) | < 1 | < 1 | < 1 | < 5 | < 5 | < 5 | < 1 | < 5 | 8 | < 1 | < 5 | < 5 | < 1 | < 1 |
| OH-Zahl[1] (mgKOH/g) | 500 | 290 | 570 | 300 | 850 | 520 | 500 | 300 | 300 | 800 | 260 | – | 290 | 290 |
| Molgew.[1] (g/mol) | 330 | 390 | 320 | 380 | 270 | 320 | 340 | 380 | 370 | 280 | 430 | – | 390 | 380 |
| Viskosität (dPas) [2] | 4,4 | 2,0 | 5,6 | 2,2 | > 10 | – | 1,8 | 3,5 | 2,2 | 1,8 | 1,3 | 5,0[3] | 0,7 | 6,5 |
| Verzweigungs grad[1] (Verzw./kg) | 2,99 | 0 | 3,91 | 0 | 7,56 | 3,12 | 2,96 | 0 | 0 | 7,16 | 0 | – | 0 | 0 |

[1]  theoretisch berechnet, unter der Voraussetzung von 0 % Glykolverlust und keine Nebenreaktionen

[2]  gemessen bei 23°C mit dem ICI-Platte-Kegel-Viskosimeter, 80 %-ig in Butylglykol

[3]  gemessen 60 %-ig in Butylglykol

EP 0 541 635 B1

Tabelle 3

| Beschichtungsmittel | Porenzeichnung | Rauchen | Kaffeetest | HCHO [mg/hm$^2$] |
|---|---|---|---|---|
| Beispiel 1 | 1 | 1 | 3 | 2.4 |
| Beispiel 2 | 1 | 0-1 | 3 | 1.9 |
| Beispiel 3 | 1 | 0 | 2-3 | 2.0 |
| Beispiel 4 | 1 | 0 | 2-3 | 2.2 |
| Beispiel 5 | 1 | 1 | 3 | 1.7 |

Tabelle 4

| Beschichtungsmittel | Porenzeichnung | Rauchen | Kaffeetest |
|---|---|---|---|
| Beispiel 3 | 1 | 0 | 2-3 |
| Vergleichsbeispiel 1 | 1-2 | 5 | 5 |
| Vergleichsbeispiel 2 | 5 | 0 | 4 |
| Vergleichsbeispiel 3 | 3-4 | 5 | 4 |
| Vergleichsbeispiel 4 | 1 | 5 | 4-5 |
| Vergleichsbeispiel 5 | 3 | 5 | 5 |
| Vergleichsbeispiel 6 | 5 | 3 | 5 |
| Vergleichsbeispiel 7 | 5 | 5 | 4 |
| Vergleichsbeispiel 8 | 1 | 4 | 5 |
| Vergleichsbeispiel 9 | 3-4 | 3 | 5 |
| Vergleichsbeispiel 10 | 1 | 4 | 5 |
| Vergleichsbeispiel 11 | 3-4 | 3 | 2 |
| Vergleichsbeispiel 12 | 4-5 | 5 | 5 |
| Vergleichsbeispiel 13 | 4 | 3 | 2-3 |

Benotungen:

Pore: 1 = sehr gut, 5 = vollständige Benetzung Rauchen: 0 = keine Rauchbildung, 5 = sehr starke Rauchbildung Kaffeetest: Benotung gemäß DIN 68861 Teil 1

Zusammenfassung der Prüfergebnisse

Eine als sehr gut oder gut bewertete Porenzeichnung (Ausbildung einer 3-dim. Oberflächenstruktur) entspricht den in der Praxis üblichen Anforderungen für solche Lacksysteme. Die Chemikalienbeständigkeit nach DIN 68 861, Teil 1 A wurde beispielhaft mit Pulverkaffee (wie in der Norm beschrieben) getestet. Die erfindungsgemäßen Beschichtungsmittel sollten mindestens die Note 3 erreichen. Die Korrelation des durchgeführten Rauchtestes mit den in der Praxis herrschenden Bedingungen zeigte, daß dort Beschichtungsmittel die mit 0 oder 1 bewertet wurden, die Anforderungen erfüllen.

Aus den in den Tabellen 3 und 4 aufgelisteten Ergebnissen läßt sich der Schluß ziehen, daß die erfindungsgemäßen Beschichtungsmittelzusammensetzungen sowohl eine sehr gute Ausbildung einer Pore (3-dimensionale Oberflächenstruktur) ermöglichen, als auch unter den in der Praxis üblichen Einbrennbedingungen emissionsarm sind und eine Formaldehydemission aufweisen, die innerhalb der EI-Grenze liegt.

Die Vergleichsbeispiele 1 - 11 weisen je nach Zusammensetzung der nicht erfindungsgemäßen Polyesterpolyole, die hier verwendet wurden, gegenüber dem erfindungsgemäßen Beispiel 3 entweder Schwächen in der Emission (flüchtige Lackbestandteile) und/oder in der Ausbildung der Porenzeichnung und/oder Chemikalienbeständigkeit auf. Das der DE 33 14 610 entsprechende Vergleichsbeispiel 12 zeigte unter gleichen Applikationsbedingungen eine deutliche Rauchbildung und neben einer sehr schlechten Chemikalienresistenz keine ausreichende Porenzeichnung. Das der DE 40 01 672 entsprechende Vergleichsbeispiel 13 zeigt neben einer deutlich höheren Emission flüchtige Lackbestandteile in Form von Rauch eine in der Praxis nicht akzeptable Porenzeichnung.

EP 0 541 635 B1

**Patentansprüche**

**Patentansprüche für folgende Vertragsstaaten : AT, BE, CH, DE, DK, FR, GB, IT, LI, NL, SE**

1. Wäßrige Beschichtungszusammensetzung, insbesondere zur Beschichtung von Finish-Folien und Endloskanten, enthaltend eine Lackkomponente I, die

    A) ein oder mehrere wasserverdünnbare Melamin- und/oder Harnstoffharze,

    B) eine oder mehrere hydroxylgruppenhaltige Polyester sowie

    C) ggf. Pigmente und/oder Füllstoffe sowie ggf. übliche Hilfs- und Zusatzstoffe und

    D) ggf. Verdünnungsmittel

    enthält und eine Lackkomponente II, die einen sauren Härtungskatalysator enthält, wobei die als Komponente B eingesetzten Polyester erhältlich sind aus

    a) 30 bis 50 Mol-% einer Mischung aus

    $a_1$) 50 bis 100 Mol-% mindestens einer gesättigten, aliphatischen Dicarbonsäure,

    $a_2$) 0 bis 50 Mol-% mindestens einer olefinisch ungesättigten, aliphatischen Dicarbonsäure,

    $a_3$) 0 bis 50 Mol-% mindestens einer aromatischen Dicarbonsäure und

    $a_4$) 0 bis 50 Mol-% mindestens eines Diisocyanates

    und

    b) 70 bis 50 Mol-% einer Mischung aus

    $b_1$) 10 bis 60 Mol-% mindestens eines monomeren und/oder oligomeren Glykols mit 2 bis 4 C-Atomen pro Glykolsegment und mit einem zahlenmittleren Molekulargewicht kleiner gleich 200,

    $b_2$) 10 bis 60 Mol-% mindestens eines Diols mit 4 bis 10 C-Atomen pro Molekül, ausgenommen die als Komponente $b_1$ eingesetzten Glykole,

    $b_3$) 0 bis 70 Mol-% mindestens eines Polyols mit im Mittel 3 bis 6 OH-Gruppen pro Molekül und mit einem zahlenmittleren Molekulargewicht kleiner gleich 1000,

    mit der Maßgabe, daß sowohl die Summe der Anteile der Komponenten $a_1$ bis $a_4$ als auch die Summe der Anteile der Komponenten $b_1$ bis $b_3$ als auch die Summe der Anteile der Komponenten a und b jeweils für sich 100 Mol-% beträgt und die Polyester B eine OH-Zahl von 200 bis 1000 mg KOH/g, bevorzugt 200 bis 800 mg KOH/g, aufweisen.

2. Wäßrige Beschichtungszusammensetzung nach Anspruch 1, dadurch gekennzeichnet, daß sie eine Lackkomponente I, enthaltend

    A) 15 bis 70 Gew.-%, bevorzugt 30 bis 55 Gew.-%, eines oder mehrerer wasserverdünnbarer Melamin- und/oder Harnstoffharze und

    B) 10 bis 50 Gew.-%, bevorzugt 20 bis 35 Gew.-%, eines oder mehrerer hydroxylgruppenhaltiger Polyester,

    wobei die Gew.-% Angaben jeweils auf das Gesamtgewicht der Lackkomponente I bezogen sind, und eine Lackkomponente II, enthaltend 0,5 bis 50 Gew.-%, bezogen auf das Gesamtgewicht der Komponenten A bis C, eines sauren Härtungskatalysators, enthält.

3. Wäßrige Beschichtungszusammensetzung nach Anspruch 1 oder 2, dadurch gekennzeichnet, daß die Polyester aus

    a) 30 bis 40 Mol-% der Dicarbonsäurekomponente a und

    b) 70 bis 60 Mol-% der Di- und Polyolkomponente b

    hergestellt worden sind.

4. Wäßrige Beschichtungszusammensetzung nach einem der Ansprüche 1 bis 3, dadurch gekennzeichnet, daß die Dicarbonsäurekomponente aus

    $a_1$) 70 bis 100 Mol-% der Komponente $a_1$,

    $a_2$) 0 bis 30 Mol-% der Komponente $a_2$,

    $a_3$) 0 bis 30 Mol-% der Komponente $a_3$ und

    $a_4$) 0 bis 30 Mol-% der Komponente $a_4$

    besteht.

5. Wäßrige Beschichtungszusammensetzung nach einem der Ansprüche 1 bis 4, dadurch gekennzeichnet, daß die Di- und/oder Polyolkomponente aus

    $b_1$) 20 bis 45 Mol-% der Komponente $b_1$,

    $b_2$) 20 bis 45 Mol-% der Komponente $b_2$ und

b$_3$) 30 bis 50 Mol-% der Komponente b$_3$
besteht.

6. Wäßrige Beschichtungszusammensetzung nach einem der Ansprüche 1 bis 5, dadurch gekennzeichnet, daß als Komponente a$_1$ gesättigte aliphatische Dicarbonsäuren mit 4 bis 10 C-Atomen eingesetzt worden sind.

7. Wäßrige Beschichtungszusammensetzung nach einem der Ansprüche 1 bis 6, dadurch gekennzeichnet, daß als Komponente b$_1$ Triethylenglykol eingesetzt worden ist.

8. Wäßrige Beschichtungszusammensetzung nach einem der Ansprüche 1 bis 7, dadurch gekennzeichnet, daß als Komponente b$_2$ 1,4-Dimethylolcyclohexan eingesetzt worden ist.

9. Wäßrige Beschichtungszusammensetzung nach einem der Ansprüche 1 bis 8, dadurch gekennzeichnet, daß als Komponente b$_3$ Polyole mit im Mittel 3 bis 4 OH-Gruppen pro Molekül und/oder einem zahlenmittleren Molekulargewicht kleiner gleich 400 eingesetzt worden sind.

10. Wäßrige Beschichtungszusammensetzung nach einem der Ansprüche 1 bis 9, dadurch gekennzeichnet, daß sie als Komponente A mit Methanol veretherte Melamin-Formaldehydharze und/oder mit Methanol veretherte Harnstoffharze enthält.

11. Verfahren zum Beschichten von Finish-Folien und Endloskanten, bei dem
    I) eine wäßrige Beschichtungszusammensetzung appliziert wird, enthaltend eine Lackkomponente I und eine Lackkomponente II, die bevorzugt unmittelbar vor der Applikation gemischt werden,
    II) der resultierende Naßfilm während einer Zeit von 8 bis 50 s bei einer Temperatur zwischen 90 und 200 °C eingebrannt wird,
    III) die resultierende Beschichtung ggf. mit einem weiteren Lack überlackiert wird,
    dadurch gekennzeichnet, daß eine wäßrige Beschichtungszusammensetzung nach einem der Ansprüche 1 bis 10 aufgebracht wird.

12. Verfahren nach Anspruch 11, dadurch gekennzeichnet, daß die Finish-Folie oder Endloskante zur Erzielung einer dreidimensionalen Oberflächenstruktur an den Stellen, an denen die Lackschicht dünner sein soll als an den anderen Stellen, mit einer Druckfarbe bedruckt wird, die ein lackabstoßendes Mittel enthält und erst danach die wäßrige Beschichtungszusammensetzung appliziert wird.

13. Finish-Folie oder Endloskante, dadurch gekennzeichnet, daß sie mit einer wäßrigen Beschichtungszusammensetzung nach einem der Ansprüche 1 bis 10 beschichtet ist.

14. Verwendung der Finish-Folie oder Endloskanten nach Anspruch 13 zur Verleimung mit Span- oder Hartfaserplatten.

**Patentansprüche für folgenden Vertragsstaat : ES**

1. Verfahren zur Herstellung einer wäßrigen Beschichtungszusammensetzung, insbesondere zur Beschichtung von Finish-Folien und Endloskanten, enthaltend eine Lackkomponente I, die
    A) ein oder mehrere wasserverdünnbare Melamin- und/oder Harnstoffharze,
    B) eine oder mehrere hydroxylgruppenhaltige Polyester sowie
    C) ggf. Pigmente und/oder Füllstoffe sowie ggf. übliche Hilfs- und Zusatzstoffe und
    D) ggf. Verdünnungsmittel
    enthält und eine Lackkomponente II, die einen sauren Härtungskatalysator enthält, wobei die als Komponente B eingesetzten Polyester hergestellt werden aus
    a) 30 bis 50 Mol-% einer Mischung aus
    a$_1$) 50 bis 100 Mol-% mindestens einer gesättigten, aliphatischen Dicarbonsäure,
    a$_2$) 0 bis 50 Mol-% mindestens einer olefinisch ungesättigten, aliphatischen Dicarbonsäure,
    a$_3$) 0 bis 50 Mol-% mindestens einer aromatischen Dicarbonsäure und
    a$_4$) 0 bis 50 Mol-% mindestens eines Diisocyanates
    und
    b) 70 bis 50 Mol-% einer Mischung aus

$b_1$) 10 bis 60 Mol-% mindestens eines monomeren und/oder oligomeren Glykols mit 2 bis 4 C-Atomen pro Glykolsegment und mit einem zahlenmittleren Molekulargewicht kleiner gleich 200,

$b_2$) 10 bis 60 Mol-% mindestens eines Diols mit 4 bis 10 C-Atomen pro Molekül, ausgenommen die als Komponente $b_1$ eingesetzten Glykole,

$b_3$) 0 bis 70 Mol-% mindestens eines Polyols mit im Mittel 3 bis 6 OH-Gruppen pro Molekül und mit einem zahlenmittleren Molekulargewicht kleiner gleich 1000,

mit der Maßgabe, daß sowohl die Summe der Anteile der Komponenten $a_1$ bis $a_4$ als auch die Summe der Anteile der Komponenten $b_1$ bis $b_3$ als auch die Summe der Anteile der Komponenten a und b jeweils für sich 100 Mol-% beträgt und die Polyester B eine OH-Zahl von 200 bis 1000 mg KOH/g, bevorzugt 200 bis 800 mg KOH/g, aufweisen.

2. Verfahren nach Anspruch 1, dadurch gekennzeichnet, daß die Beschichtungszusammensetzung eine Lackkomponente I, enthaltend

A) 15 bis 70 Gew.-%, bevorzugt 30 bis 55 Gew.-%, eines oder mehrerer wasserverdünnbarer Melamin- und/oder Harnstoffharze und

B) 10 bis 50 Gew.-%, bevorzugt 20 bis 35 Gew.-%, eines oder mehrerer hydroxylgruppenhaltiger Polyester,

wobei die Gew.-% Angaben jeweils auf das Gesamtgewicht der Lackkomponente I bezogen sind, und eine Lackkomponente II, enthaltend 0,5 bis 50 Gew.-%, bezogen auf das Gesamtgewicht der Komponenten A bis C, eines sauren Härtungskatalysators, enthält.

3. Verfahren nach Anspruch 1 oder 2, dadurch gekennzeichnet, daß die Polyester aus

a) 30 bis 40 Mol-% der Dicarbonsäurekomponente a und

b) 70 bis 60 Mol-% der Di- und Polyolkomponente b

hergestellt werden.

4. Verfahren nach einem der Ansprüche 1 bis 3, dadurch gekennzeichnet, daß die Dicarbonsäurekomponente aus

$a_1$) 70 bis 100 Mol-% der Komponente $a_1$,

$a_2$) 0 bis 30 Mol-% der Komponente $a_2$,

$a_3$) 0 bis 30 Mol-% der Komponente $a_3$ und

$a_4$) 0 bis 30 Mol-% der Komponente $a_4$

besteht.

5. Verfahren nach einem der Ansprüche 1 bis 4, dadurch gekennzeichnet, daß die Di-und/oder Polyolkomponente aus

$b_1$) 20 bis 45 Mol-% der Komponente $b_1$,

$b_2$) 20 bis 45 Mol-% der Komponente $b_2$ und

$b_3$) 30 bis 50 Mol-% der Komponente $b_3$

besteht.

6. Verfahren nach einem der Ansprüche 1 bis 5, dadurch gekennzeichnet, daß als Komponente $a_1$ gesättigte aliphatische Dicarbonsäuren mit 4 bis 10 C-Atomen eingesetzt werden

7. Verfahren nach einem der Ansprüche 1 bis 6, dadurch gekennzeichnet, daß als Komponente $b_1$ Triethylenglykol eingesetzt wird.

8. Verfahren nach einem der Ansprüche 1 bis 7, dadurch gekennzeichnet, daß als Komponente $b_2$ 1,4-Dimethylolcyclohexan eingesetzt wird.

9. Verfahren nach einem der Ansprüche 1 bis 8, dadurch gekennzeichnet, daß als Komponente $b_3$ Polyole mit im Mittel 3 bis 4 OH-Gruppen pro Molekül und/oder einem zahlenmittleren Molekulargewicht kleiner gleich 400 eingesetzt werden.

10. Verfahren nach einem der Ansprüche 1 bis 9, dadurch gekennzeichnet, daß die Beschichtungszusammensetzung als Komponente A mit Methanol veretherte Melamin-Formaldehydharze und/oder Methanol veretherte Harnstoffharze enthält

**11.** Verfahren zum Beschichten von Finish-Folien und Endloskanten, bei dem

I) eine wäßrige Beschichtungszusammensetzung appliziert wird, enthaltend eine Lackkomponente I und eine Lackkomponente II, die bevorzugt unmittelbar vor der Applikation gemischt werden,

II) der resultierende Naßfilm während einer Zeit von 8 bis 50 s bei einer Temperatur zwischen 90 und 200 ° C eingebrannt wird,

III) die resultierende Beschichtung ggf. mit einem weiteren Lack überlackiert wird,

dadurch gekennzeichnet, daß eine wäßrige Beschichtungszusammensetzung, die nach einem Verfahren nach einem der Ansprüche 1 bis 10 hergestellt worden ist, aufgebracht wird.

**12.** Verfahren nach Anspruch 11, dadurch gekennzeichnet, daß die Finish-Folien oder Endloskante zur Erzielung einer dreidimensionalen Oberflächenstruktur an den Stellen, an denen die Lackschicht dünner sein soll als an den anderen Stellen, mit einer Druckfarbe bedruckt wird, die ein lackabstoßendes Mittel enthält und erst danach die wäßrige Beschichtungszusammensetzung appliziert wird.

**13.** Verwendung der Finish-Folie oder Endloskanten, die nach einem Verfahren nach Anspruch 11 oder 12 hergestellt worden sind, zur Verleimung mit Span- oder Hartfaserplatten.

**Claims**

**Claims for the following Contracting States : AT, BE, CH, DE, DK, FR, GB, IT, LI, NL, SE**

**1.** Aqueous coating composition, in particular for the coating of veneer films and continuous edges, containing a coating component I, which comprises

A) one or more water-dilutable melamine and/or urea resins,

B) one or more hydroxyl-containing polyesters and

C) if desired, pigments and/or fillers and, if desired, customary auxiliaries and additives and

D) if desired, diluents,

and a coating component II which contains an acid curing catalyst, the polyesters used as component B being obtainable from

a) 30 to 50 mol% of a mixture comprising

$a_1$) 50 to 100 mol% of at least one saturated, aliphatic dicarboxylic acid,

$a_2$) 0 to 50 mol% of at least one olefinically unsaturated, aliphatic dicarboxylic acid,

$a_3$) 0 to 50 mol% of at least one aromatic dicarboxylic acid and

$a_4$) 0 to 50 mol% of at least one diisocyanate

and

b) 70 to 50 mol% of a mixture comprising

$b_1$) 10 to 60 mol% of at least one monomeric and/or oligomeric glycol having 2 to 4 C atoms per glycol segment and a number-average molecular weight of less than or equal to 200,

$b_2$) 10 to 60 mol% of at least one diol having 4 to 10 C atoms per molecule, with the exception of the glycols used as component $b_1$,

$b_3$) 0 to 70 mol% of at least one polyol having on average 3 to 6 OH groups per molecule and a number-average molecular weight of less than or equal to 1000,

with the proviso that not only the sum of the proportions of components $a_1$ to $a_4$ but also the sum of the proportions of components $b_1$ to $b_3$ as well as the sum of the proportions of components a and b are in each case by themselves 100 mol% and the polyesters B have an OH number of from 200 to 1000 mg of KOH/g, preferably from 200 to 800 mg of KOH/g.

**2.** Aqueous coating composition according to Claim 1, characterized in that it contains a coating component I, comprising

A) 15 to 70% by weight, preferably 30 to 55% by weight, of one or more water-dilutable melamine and/or urea resins and

B) 10 to 50% by weight, preferably 20 to 35% by weight, of one or more hydroxyl-containing polyesters,

the percentages by weight given being in each case relative to the total weight of coating component I, and a coating component II, comprising 0.5 to 50% by weight, relative to the total weight of components A to C, of an acid curing catalyst.

**3.** Aqueous coating composition according to Claim 1 or 2, characterized in that the polyesters have been prepared from

a) 30 to 40 mol% of dicarboxylic acid component a and

b) 70 to 60 mol% of di- and polyol component b.

4. Aqueous coating composition according to one of Claims 1 to 3, characterized in that the dicarboxylic acid component comprises

$a_1$) 70 to 100 mol% of component $a_1$,

$a_2$) 0 to 30 mol% of component $a_2$,

$a_3$) 0 to 30 mol% of component $a_3$ and

$a_4$) 0 to 30 mol% of component $a_4$.

5. Aqueous coating composition according to one of Claims 1 to 4, characterized in that the di- and/or polyol component comprises

$b_1$) 20 to 45 mol% of component $b_1$,

$b_2$) 20 to 45 mol% of component $b_2$ and

$b_3$) 30 to 50 mol% of component $b_3$.

6. Aqueous coating composition according to one of Claims 1 to 5, characterized in that saturated aliphatic dicarboxylic acids having 4 to 10 C atoms have been used as component $a_1$.

7. Aqueous coating composition according to one of Claims 1 to 6, characterized in that triethylene glycol has been used as component $b_1$.

8. Aqueous coating composition according to one of Claims 1 to 7, characterized in that 1,4-dimethylolcyclohexane has been used as component $b_2$.

9. Aqueous coating composition according to one of Claims 1 to 8, characterized in that polyols having on average 3 to 4 OH groups per molecule and/or a number-average molecular weight of less than or equal to 400 have been used as component $b_3$.

10. Aqueous coating composition according to one of Claims 1 to 9, characterized in that it contains melamin/formaldehyde resins etherified with methanol and/or urea resins etherified with methanol as component A.

11. Process for the coating of veneer films and continuous edges, in which

I) an aqueous coating composition is applied which contains a coating component I and a coating component II which are preferably mixed directly before application,

II) the resulting wet film is baked at a temperature between 90 and 200 °C for 8 to 50 s,

III) the resulting coating is, if desired, overcoated with a further paint,

characterized in that an aqueous coating composition according to one of Claims 1 to 10 is applied.

12. Process according to Claim 11, characterized in that the veneer film or continuous edge, in order to obtain a three-dimensional surface structure, is printed with a printing ink containing a paint-repellant agent at the places where the paint film is supposed to be thinner than at the other places and only then is the aqueous coating composition applied.

13. Veneer film or continuous edge, characterized in that it is coated with an aqueous coating composition according to one of Claims 1 to 10.

14. Use of the veneer film or continuous edges according to Claim 13 for gluing onto chip- or hardboards.

**Claims for the following Contracting State : ES**

1. Process for the preparation of an aqueous coating composition, in particular for the coating of veneer films and continuous edges, containing a coating component I, which comprises

A) one or more water-dilutable melamine and/or urea resins,

B) one or more hydroxyl-containing polyesters and

C) if desired, pigments and/or fillers and, if desired, customary auxiliaries and additives and

D) if desired, diluents,

and a coating component II which contains an acid curing catalyst, the polyesters used as component B being prepared from

a) 30 to 50 mol% of a mixture comprising

$a_1$) 50 to 100 mol% of at least one saturated, aliphatic dicarboxylic acid,

$a_2$) 0 to 50 mol% of at least one olefinically unsaturated, aliphatic dicarboxylic acid,

$a_3$) 0 to 50 mol% of at least one aromatic dicarboxylic acid and

$a_4$) 0 to 50 mol% of at least one diisocyanate

and

b) 70 to 50 mol% of a mixture comprising

$b_1$) 10 to 60 mol% of at least one monomeric and/or oligomeric glycol having 2 to 4 C atoms per glycol segment and a number-average molecular weight of less than or equal to 200,

$b_2$) 10 to 60 mol% of at least one diol having 4 to 10 C atoms per molecule, with the exception of the glycols used as component $b_1$,

$b_3$) 0 to 70 mol% of at least one polyol having on average 3 to 6 OH groups per molecule and a number-average molecular weight of less than or equal to 1000,

with the proviso that not only the sum of the proportions of components $a_1$ to $a_4$ but also the sum of the proportions of components $b_1$ to $b_3$ as well as the sum of the proportions of components a and b are in each case by themselves 100 mol% and the polyesters B have an OH number of from 200 to 1000 mg of KOH/g, preferably from 200 to 800 mg of KOH/g.

2. Process according to Claim 1, characterized in that the coating composition contains a coating component I, comprising

A) 15 to 70% by weight, preferably 30 to 55% by weight, of one or more water-dilutable melamine and/or urea resins and

B) 10 to 50% by weight, preferably 20 to 35% by weight, of one or more hydroxyl-containing polyesters,

the percentages by weight given being in each case relative to the total weight of coating component I, and a coating component II, comprising 0.5 to 50% by weight, relative to the total weight of components A to C, of an acid curing catalyst.

3. Process according to Claim 1 or 2, characterized in that the polyesters are prepared from

a) 30 to 40 mol% of dicarboxylic acid component a and

b) 70 to 60 mol% of di- and polyol component b.

4. Process according to one of Claims 1 to 3, characterized in that the dicarboxylic acid component comprises

$a_1$) 70 to 100 mol% of component $a_1$,

$a_2$) 0 to 30 mol% of component $a_2$,

$a_3$) 0 to 30 mol% of component $a_3$ and

$a_4$) 0 to 30 mol% of component $a_4$.

5. Process according to one of Claims 1 to 4, characterized in that the di- and/or polyol component comprises

$b_1$) 20 to 45 mol% of component $b_1$,

$b_2$) 20 to 45 mol% of component $b_2$ and

$b_3$) 30 to 50 mol% of component $b_3$.

6. Process according to one of Claims 1 to 5, characterized in that saturated aliphatic dicarboxylic acids having 4 to 10 C atoms are used as component $a_1$.

7. Process according to one of Claims 1 to 6, characterized in that triethylene glycol is used as component $b_1$.

8. Process according to one of Claims 1 to 7, characterized in that 1,4-dimethylolcyclohexane is used as component $b_2$.

20

9. Process according to one of Claims 1 to 8, characterized in that polyols having on average 3 to 4 OH groups per molecule and/or a number-average molecular weight of less than or equal to 400 are used as component $b_3$.

10. Process according to one of Claims 1 to 9, characterized in that the coating composition contains melamin/formaldehyde resins etherified with methanol and/or urea resins etherified with methanol as component B.

11. Process for the coating of veneer films and continuous edges, in which
    I) an aqueous coating composition is applied which contains a coating component I and a coating component II which are preferably mixed directly before application,
    II) the resulting wet film is baked at a temperature between 90 and 200 °C for 8 to 50 s,
    III) the resulting coating is, if desired, overcoated with a further paint,
    characterized in that an aqueous coating composition which has been prepared according to a process according to one of Claims 1 to 10 is applied.

12. Process according to Claim 11, characterized in that the veneer films or continuous edge, in order to obtain a three-dimensional surface structure, is [sic] printed with a printing ink containing a paint-repellant agent at the places where the paint film is supposed to be thinner than at the other places and only then is the aqueous coating composition applied.

13. Use of the veneer film or continuous edges which have been prepared according to a process according to Claim 11 or 12 for gluing onto chip- or hardboards.

**Revendications**
**Revendications pour les Etats contractants suivants : AT, BE, CH, DE, DK, FR, GB, IT, LI, NL, SE**

1. Composition de revêtement aqueuse, en particulier pour le revêtement de feuilles de finition et de bords continus, contenant un composant de laque I, qui contient
    A) une ou plusieurs résines de mélamine et/ou d'urée diluables à l'eau,
    B) un ou plusieurs polyesters contenant des groupements hydroxyles ainsi que
    C) le cas échéant, des pigments et/ou des charges ainsi que, le cas échéant, des additifs et des adjuvants usuels et
    D) le cas échéant, des diluants,
    et un composant de laque II, qui contient un catalyseur de durcissement acide, les polyesters utilisés en tant que composant B pouvant être obtenus à partir
    a) de 30 à 50 % en moles d'un mélange
    $a_1$) de 50 à 100 % en moles au moins d'un acide dicarboxylique aliphatique saturé,
    $a_2$) de 0 à 50 % en moles au moins d'un acide dicarboxylique aliphatique oléfiniquement insaturé,
    $a_3$) de 0 à 50 % en moles au moins d'un acide dicarboxylique aromatique et
    $a_4$) de 0 à 50 % en moles au moins d'un diisocyanate
    et
    b) de 70 à 50 % en moles d'un mélange
    $b_1$) de 10 à 60 % en moles au moins d'un glycol monomère et/ou oligomère ayant de 2 à 4 atomes de C par segment de glycol et un poids moléculaire moyen au nombre inférieur ou égal à 200,
    $b_2$) de 10 à 60 % en moles au moins d'un diol ayant de 4 à 10 atomes de C par molécule, à l'exception des glycols utilisés en tant que composant $b_1$,
    $b_3$) de 0 à 70 % en moles au moins d'un polyol ayant en moyenne de 3 à 6 groupements OH par molécule et ayant un poids moléculaire moyen au nombre inférieur ou égal à 1 000,
    sous réserve que non seulement la somme des proportions des composants $a_1$ à $a_4$ et également la somme des proportions des composants $b_1$ à $b_3$ mais encore la somme des proportions des composants a et b sont, chacune pour soi, de 100 % en moles et que les polyesters B présentent un indice OH de 200 à 1 000 mg de KOH/g, de préférence de 200 à 800 mg de KOH/g.

2. Composition de revêtement aqueuse selon la revendication 1, caractérisée en ce qu'elle contient un composant de laque I, contenant
    A) de 15 à 70 % en poids, de préférence de 30 à 55 % en poids, d'une ou de plusieurs résines de mélamine et/ou d'urée diluables à l'eau et

21

B) de 10 à 50 % en poids, de préférence de 20 à 35 % en poids, d'un ou de plusieurs polyesters contenant des groupements hydroxyles,

les indications de % en poids se rapportant à chaque fois au poids total du composant de laque I et un composant de laque II, contenant de 0,5 à 50 % en poids, par rapport au poids total des composants A à C, d'un catalyseur de durcissement acide.

3. Composition de revêtement aqueuse selon la revendication 1 ou 2, caractérisée en ce que les polyesters ont été préparés à partir

a) de 30 à 40 % en moles du composant d'acide dicarboxylique a et

b) de 70 à 60 % en moles du composant de diol et de polyol b.

4. Composition de revêtement aqueuse selon l'une quelconque des revendications 1 à 3, caractérisée en ce que le composant d'acide dicarboxylique se compose

$a_1$) de 70 à 100 % en moles du composant $a_1$,

$a_2$) de 0 à 30 % en moles du composant $a_2$,

$a_3$) de 0 à 30 % en moles du composant $a_3$ et

$a_4$) de 0 à 30 % en moles du composant $a_4$.

5. Composition de revêtement aqueuse selon l'une quelconque des revendications 1 à 4, caractérisée en ce que le composant de diol et/ou de polyol se compose

$b_1$) de 20 à 45 % en moles du composant $b_1$,

$b_2$) de 20 à 45 % en moles du composant $b_2$ et

$b_3$) de 30 à 50 % en moles du composant $b_3$,

6. Composition de revêtement aqueuse selon l'une quelconque des revendications 1 à 5, caractérisée en ce que l'on a utilisé en tant que composant $a_1$ des acides dicarboxyliques aliphatiques saturés ayant de 4 à 10 atomes de C.

7. Composition de revêtement aqueuse selon l'une quelconque des revendications 1 à 6, caractérisée en ce que l'on a utilisé en tant que composant $b_1$ du triéthylèneglycol.

8. Composition de revêtement aqueuse selon l'une quelconque des revendications 1 à 7, caractérisée en ce que l'on a utilisé en tant que composant $b_2$ du 1,4-diméthylolcyclohexane.

9. Composition de revêtement aqueuse selon l'une quelconque des revendications 1 à 8, caractérisée en ce que l'on a utilisé en tant que composant $b_3$ des polyols ayant en moyenne de 3 à 4 groupements OH par molécule et/ou un poids moléculaire moyen au nombre inférieur ou égal à 400.

10. Composition de revêtement aqueuse selon l'une quelconque des revendications 1 à 9, caractérisée en ce qu'elle contient en tant que composant A des résines de mélamine-formaldéhyde éthérées au méthanol et/ou des résines d'urée éthérées au méthanol.

11. Procédé de revêtement de feuilles de finition et de bords continus, lors duquel

I) on procède à l'application d'un composition de revêtement aqueuse, contenant un composant de laque I et un composant de laque II, qui sont mélangés immédiatement avant l'application,

II) on soumet à cuisson le film humide résultant pendant une durée de 8 à 50 secondes à une température comprise entre 90 et 200 °C,

III) on procède, le cas échéant, au surlaquage du revêtement résultant à l'aide d'une laque supplémentaire,

caractérisé en ce que l'on procède à l'application d'une composition de revêtement aqueuse selon l'une quelconque des revendications 1 à 10.

12. Procédé selon la revendication 11, caractérisé en ce que la feuille de finition ou le bord continu, en vue de la réalisation d'une structure superficielle tridimensionnelle, est imprimé(e) aux endroits auxquels la couche de laque doit être plus mince qu'à d'autres endroits, à l'aide d'une encre grasse, qui contient un agent de répulsion vis-à-vis des laques et en ce que l'on procède seulement subséquemment à l'application de la composition de revêtement aqueuse.

**13.** Feuille de finition ou bord continu, caractérisée en ce qu'elle ou qu'il est revêtu(e) d'une composition de revêtement aqueuse selon l'une quelconque des revendications 1 à 10.

**14.** Utilisation des feuilles de finition ou des bords continus selon la revendication 13 pour le collage avec des panneaux en bois reconstitué ou des panneaux en fibres durs.

**Revendications pour l'Etat contractant suivant : ES**

**1.** Procédé de préparation d'une composition de revêtement aqueuse, en particulier pour le revêtement de feuilles de finition et de bords continus, contenant un composant de laque I, qui contient

A) une ou plusieurs résines de mélamine et/ou d'urée diluables à l'eau,

B) un ou plusieurs polyesters contenant des groupements hydroxyles ainsi que

C) le cas échéant, des pigments et/ou des charges ainsi que, le cas échéant, des additifs et des adjuvants usuels et

D) le cas échéant, des diluants,

et un composant de laque II, qui contient un catalyseur de durcissement acide, les polyesters utilisés en tant que composant B pouvant être obtenus à partir

a) de 30 à 50 % en moles d'un mélange

$a_1$) de 50 à 100 % en moles au moins d'un acide dicarboxylique aliphatique saturé,

$a_2$) de 0 à 50 % en moles au moins d'un acide dicarboxylique aliphatique oléfiniquement insaturé,

$a_3$) de 0 à 50 % en moles au moins d'un acide dicarboxylique aromatique et

$a_4$) de 0 à 50 % en moles au moins d'un diisocyanate

et

b) de 70 à 50 % en moles d'un mélange

$b_1$) de 10 à 60 % en moles au moins d'un glycol monomère et/ou oligomère ayant de 2 à 4 atomes de C par segment de glycol et un poids moléculaire moyen au nombre inférieur ou égal à 200,

$b_2$) de 10 à 60 % en moles au moins d'un diol ayant de 4 à 10 atomes de C par molécule, à l'exception des glycols utilisés en tant que composant $b_1$,

$b_3$) de 0 à 70 % en moles au moins d'un polyol ayant en moyenne de 3 à 6 groupements OH par molécule et ayant un poids moléculaire moyen au nombre inférieur ou égal à 1 000,

sous réserve que non seulement la somme des proportions des composants $a_1$ à $a_4$ et également la somme des proportions des composants $b_1$ à $b_3$ mais encore la somme des proportions des composants a et b sont, chacune pour soi, de 100 % en moles et que les polyesters B présentent un indice OH de 200 à 1 000 mg de KOH/g, de préférence de 200 à 800 mg de KOH/g.

**2.** Procédé selon la revendication 1, caractérisé en ce que la composition de revêtement aqueuse contient un composant de laque I; contenant

A) de 15 à 70 % en poids, de préférence de 30 à 55 % en poids, d'une ou de plusieurs résines de mélamine et/ou d'urée diluables à l'eau et

B) de 10 à 50 % en poids, de préférence de 20 à 35 % en poids, d'un ou de plusieurs polyesters contenant des groupements hydroxyles,

les indications de % en poids se rapportant à chaque fois au poids total du composant de laque I et un composant de laque II, contenant de 0,5 à 50 % en poids, par rapport au poids total des composants A à C, d'un catalyseur de durcissement acide.

**3.** Procédé selon la revendication 1 ou 2, caractérisé en ce que les polyesters sont préparés à partir

a) de 30 à 40 % en moles du composant d'acide dicarboxylique a et

b) de 70 à 60 % en moles du composant de diol et de polyol b.

**4.** Procédé selon l'une quelconque des revendications 1 à 3, caractérisé en ce que le composant d'acide dicarboxylique se compose

$a_1$) de 70 à 100 % en moles du composant $a_1$,

$a_2$) de 0 à 30 % en moles du composant $a_2$,

$a_3$) de 0 à 30 % en moles du composant $a_3$ et

$a_4$) de 0 à 30 % en moles du composant $a_4$.

**5.** Procédé selon l'une quelconque des revendications 1 à 4, caractérisé en ce que le composant de diol et/ou de polyol se compose

23

b$_1$) de 20 à 45 % en moles du composant b$_1$,

b$_2$) de 20 à 45 % en moles du composant b$_2$ et

b$_3$) de 30 à 50 % en moles du composant b$_3$,

6. Procédé selon l'une quelconque des revendications 1 à 5, caractérisé en ce que l'on utilise en tant que composant a$_1$ des acides dicarboxyliques aliphatiques saturés ayant de 4 à 10 atomes de C.

7. Procédé selon l'une quelconque des revendications 1 à 6, caractérisé en ce que l'on utilise en tant que composant b$_1$ du triéthylèneglycol.

8. Procédé selon l'une quelconque des revendications 1 à 7, caractérisé en ce que l'on utilise en tant que composant b$_2$ du 1,4-diméthylolcyclohexane.

9. Procédé selon l'une quelconque des revendications 1 à 8, caractérisé en ce que l'on utilise en tant que composant b$_3$ des polyols ayant en moyenne de 3 à 4 groupements OH par molécule et/ou un poids moléculaire moyen au nombre inférieur ou égal à 400.

10. Procédé selon l'une quelconque des revendications 1 à 9, caractérisé en ce que la composition de revêtement aqueuse contient en tant que composant A des résines de mélamine-formaldéhyde éthérées au méthanol et/ou des résines d'urée éthérées au méthanol.

11. Procédé de revêtement de feuilles de finition et de bords continus, lors duquel

I) on procède à l'application d'une composition de revêtement aqueuse, contenant un composant de laque I et un composant de laque II, qui sont mélangés immédiatement avant l'application,

II) on soumet à cuisson le film humide résultant pendant une durée de 8 à 50 secondes à une température comprise entre 90 et 200 °C,

III) on procède, le cas échéant, au surlaquage du revêtement résultant à l'aide d'une laque supplémentaire,

caractérisé en ce que l'on procède à l'application d'une composition de revêtement aqueuse qui a été préparée selon l'une quelconque des revendications 1 à 10.

12. Procédé selon la revendication 11, caractérisé en ce que la feuille de finition ou le bord continu, en vue de la réalisation d'une structure superficielle tridimensionnelle, est imprimé(e) aux endroits auxquels la couche de laque doit être plus mince qu'à d'autres endroits, à l'aide d'une encre grasse, qui contient un agent de répulsion vis-à-vis des laques et en ce que l'on procède seulement subséquemment à l'application de la composition de revêtement aqueuse.

13. Utilisation des feuilles de finition ou des bords continus qui ont été préparés selon la revendication 11 ou 12 pour le collage avec des panneaux en bois reconstitué ou des panneaux en fibres durs.